# EUROPÄISCHE PATENTSCHRIFT

(11) **EP 3 750 842 B1**
(45) Veröffentlichungstag und Bekanntmachung des Hinweises auf die Patenterteilung: **20.10.2021**
(21) Anmeldenummer: 19179438.7
(22) Anmeldetag: 11.06.2019
(51) Int. Cl.: B66C 13/48, B66C 13/08, B66C 13/46

(54) **VERLADEN EINER LAST MIT EINEM KRANSYSTEM**
LOADING A LOAD WITH A CRANE SYSTEM
CHARGEMENT D'UNE CHARGE À L'AIDE D'UN SYSTÈME DE GRUE

(43) Veröffentlichungstag der Anmeldung: 16.12.2020
(73) Patentinhaber: Siemens Aktiengesellschaft, 80333 München (DE)
(72) Erfinder: Dobler, Thomas, 76770 Hatzenbühl (DE); Vogel, Julian, 90429 Nürnberg (DE)

(56) Entgegenhaltungen:
- EP-A1- 3 000 762
- JP-A- 2008 168 952
- US-A1- 2004 215 367

## Beschreibung

Die vorliegende Erfindung betrifft ein Verfahren zum Verladen einer Last mit einem Kransystem, ein Kransystem zum Verladen einer Last sowie ein Computerprogramm.

In Containerterminals werden Güterzüge und Lkws verladen, insbesondere be- und entladen. Dabei steuert ein Kranbediener manuell ein Hebezeug eines Krans. Um die Verladung möglichst effizient, kostengünstig und sicher zu gestalten, ist es wünschenswert, möglichst viele Vorgänge automatisiert durchzuführen. Die EP 3 000 762 A1 offenbart ein Verfahren gemäß dem Oberbegriff des unabhängigen Anspruchs 1 und auch ein Kransystem gemäß dem Oberbegriff des unabhängigen Anspruchs 9.

Es ist daher eine Aufgabe der vorliegenden Erfindung, ein verbessertes Konzept zum Verladen einer Last mit einem Kransystem anzugeben, welches eine automatisierte Verladung der Last ermöglicht.

Erfindungsgemäß wird diese Aufgabe durch ein Verfahren und ein Kransystem sowie ein Computerprogramm nach den unabhängigen Ansprüchen gelöst. Vorteilhafte Weiterbildungen und weitere Ausgestaltungen sind Gegenstand der abhängigen Ansprüche.

Das verbesserte Konzept basiert auf der Idee, ein Transportfahrzeug, welches be- oder entladen werden soll, mittels eines Kamerasystems abzubilden und die Kameradaten mittels eines künstlichen neuronalen Netzes zu analysieren. Anhand vorgegebener Marker, zu deren Erkennung das neuronale Netz insbesondere trainiert wurde, wird ein Hebezeug zur automatisierten Verladung der Last angesteuert.

Gemäß einem ersten unabhängigen Aspekt des verbesserten Konzepts wird ein Verfahren zum Verladen einer Last mit einem Kransystem angegeben. Dabei wird mittels eines Kamerasystems des Kransystems wenigstens ein Bilddatenstrom erzeugt. Der wenigstens eine Bilddatenstrom wird mittels einer Recheneinheit des Kransystems anhand eines, insbesondere trainierten, künstlichen neuronalen Netzes analysiert, insbesondere kontinuierlich, periodisch und/oder wiederholt analysiert. Mittels der Recheneinheit werden basierend auf der Analyse ein erster Marker in einem ersten Einzelbild des wenigstens einen Bilddatenstroms und ein zweiter Marker in einem zweiten Einzelbild des wenigstens einen Bilddatenstroms erkannt. Mittels der Recheneinheit werden eine Position des ersten Markers und eine Position des zweiten Markers bestimmt und die Last wird mittels eines Hebezeugs des Kransystems abhängig von den Positionen der Marker automatisiert verladen.

Unter einem Bilddatenstrom kann hier und im Folgenden eine zeitliche Abfolge mehrerer Einzelbilder, die auch als Frames bezeichnet werden können, verstanden werden. Insbesondere können die Einzelbilder mit einer vordefinierten Abtastrate aufgenommen werden, wobei die Abtastrate beispielsweise in einem Bereich von 10 ms bis 10 s liegen kann, beispielsweise in der Größenordnung von 100 ms, oder näherungsweise 100 ms betragen kann. Mit anderen Worten handelt es sich bei dem wenigstens einen Bilddatenstrom beispielsweise um wenigstens einen Videostream.

Das Kamerasystem erzeugt den wenigstens einen Bilddatenstrom insbesondere durch Abbildung eines oder mehrerer Zielbereiche des Kamerasystems in einer Umgebung des Kransystems. Insbesondere liegen die Zielbereiche in einem Bereich, in dem sich ein Transportfahrzeug, welches mittels des Verfahrens be- oder entladen werden soll, zu diesem Zweck befindet.

Bei dem künstlichen neuronalen Netz handelt es sich insbesondere um ein neuronales Netz, welches zur Mustererkennung in Bilddaten trainiert wurde. Beispielsweise kann es sich um ein faltendes neuronales Netz (englisch "convolutional neural net", CNN) handeln.

Dass der wenigstens eine Bilddatenstrom anhand des neuronalen Netzes analysiert wird, kann beispielsweise derart verstanden werden, dass jeder Bilddatenstrom, den der wenigstens eine Bilddatenstrom beinhaltet, analysiert wird, wobei zur Analyse jedes der Einzelbilder des entsprechenden Bilddatenstroms analysiert wird, für jedes der Einzelbilder also insbesondere eine Mustererkennung durchgeführt wird.

Der erste und der zweite Marker befinden sich insbesondere an oder auf dem Transportfahrzeug. Insbesondere kann es sich um mit dem Transportfahrzeug fest verbaute oder daran befestigte Komponenten, beispielsweise funktionale Komponenten, handeln. Alternativ oder zusätzlich können die Marker auch dediziert für den Zweck der Mustererkennung vorgesehen werden.

Dass der erste und der zweite Marker in dem jeweiligen Einzelbild mittels der Analyse erkannt werden, kann derart verstanden werden, dass anhand der Analyse durch das neuronale Netz festgestellt wird, dass ein vorgegebenes und/oder gelerntes Muster in dem jeweiligen Einzelbild vorhanden ist, wobei das Muster insbesondere durch Training des neuronalen Netzes vorgegeben oder gelernt wurde.

Der erste und der zweite Marker befinden sich insbesondere an unterschiedlichen Positionen des Transportfahrzeugs, insbesondere an gegenüberliegenden Enden des Transportfahrzeugs. Dabei bezieht sich die Bezeichnung "Ende" des Transportfahrzeugs auf eine Längsrichtung oder Längsachse des Transportfahrzeugs. Insbesondere befindet sich der erste Marker an einem ersten Längsende des Transportfahrzeugs und der zweite Marker befindet sich an einem zweiten, dem ersten Längsende gegenüberliegenden Längsende des Transportfahrzeugs.

Unter der Längsrichtung des Transportfahrzeugs kann beispielsweise eine Richtung verstanden werden, entlang der sich das Transportfahrzeug, falls zutreffend insbesondere bei Neutralstellung eines Lenksystems des Transportfahrzeugs, bewegen kann.

Bei dem Transportfahrzeug kann es sich beispielsweise um einen Lkw, einen Lkw-Anhänger oder einen Lkw-Auflieger oder einen Zugwaggon handeln. Im Falle eines Zugwaggons können beispielsweise Schienen vorgesehen sein, auf denen der Zugwaggon in den Zielbereich oder aus dem Zielbereich bewegt werden kann. In diesem Fall entspricht die Längsachse des Transportfahrzeugs insbesondere einer Ausrichtung oder Längsrichtung der Schienen.

Die Last kann insbesondere einen Behälter, insbesondere einen Container, beispielsweise einen Seefrachtcontainer, beispielsweise gemäß der Norm ISO 668 (sechste Ausgabe, 2013) beinhalten.

Bei dem Transportfahrzeug handelt es sich insbesondere um ein Fahrzeug, welches durch den Kran beziehungsweise das Kransystem beladen oder entladen werden soll, und welches insbesondere die Last nach dem Beladen beziehungsweise vor dem Entladen transportiert.

Bei dem neuronalen Netz handelt es sich insbesondere um ein Softwaremodul, welches auf der Recheneinheit gespeichert ist.

Bei der Position des ersten und des zweiten Markers handelt es sich insbesondere um jeweilige reale Positionen, also absolute Positionen, gegeben durch entsprechende Koordinaten bezüglich eines vorgegebenen Koordinatensystems, welches insbesondere mit einem Gestell des Kransystems oder einem Untergrund, auf welchem sich das Transportfahrzeug befindet, verbunden ist. Insbesondere kann die Position des jeweiligen Markers eindeutig durch eine Position des Kamerasystems bezüglich des vorgegebenen Koordinatensystems und eine Anordnung oder Relativposition des Markers innerhalb des Einzelbildes gegeben sein. Näherungsweise kann die Position des Markers allein durch die jeweilige Position des Kamerasystems gegeben sein.

Das Hebezeug beinhaltet insbesondere ein Containergeschirr und kann auch als Lastaufnahmemittel oder Spreader bezeichnet werden. Insbesondere beinhaltet das Hebezeug eine Greifvorrichtung, mittels welcher die Last, insbesondere der Container, gegriffen und von dem Transportfahrzeug gehoben oder auf dem Transportfahrzeug abgestellt werden kann.

Das Hebezeug beinhaltet beispielsweise einen Rahmen, insbesondere einen Teleskoprahmen, der entsprechend einer Länge des Containers ausgefahren beziehungsweise eingestellt werden kann. Greifelemente des Hebezeugs können beispielsweise in entsprechende Eckbeschläge des Containers eingreifen und verriegelt werden.

Dass die Last mittels des Hebezeugs automatisiert verladen wird, kann insbesondere derart verstanden werden, dass wenigstens ein Arbeitsparameter des Hebezeugs oder des Kransystems ohne manuellen Eingriff selbsttätig durch das Kransystem abhängig von den Positionen der Marker eingestellt wird, um die Last zu verladen. Beispielsweise kann das Verladen vollautomatisiert erfolgen, also ohne Eingriff durch einen Bediener.

Gemäß dem verbesserten Konzept können Einstellungen des Kransystems, insbesondere des Hebezeugs, zum Verladen der Last, teil- oder vollautomatisiert eingestellt werden. Insbesondere werden die Positionen der Marker vollautomatisch aus dem wenigstens einen Bilddatenstrom ermittelt. Die Verladung der Last kann also wenigstens teilweise automatisiert oder gegebenenfalls vollautomatisiert und daher besonders effizient, insbesondere zeitsparend und kostensparend, sowie mit erhöhter Sicherheit erfolgen.

Durch den Einsatz des neuronalen Netzes ist eine Erkennung und Positionsbestimmung der Marker mit hoher Zuverlässigkeit möglich, sodass ein hoher Automatisierungsgrad ermöglicht werden kann. Weitere Vorteile, die sich durch den Einsatz des neuronalen Netzes ergeben, sind dessen individuelle Trainierbarkeit, also dessen spezifische Anpassung an die optische Erscheinung der Marker beziehungsweise vorgegebenen Muster, und dessen hohe Geschwindigkeit bei der Mustererkennung.

Gemäß zumindest einer Ausführungsform des Verfahrens werden mittels der Recheneinheit basierend auf der Analyseeinheit ein dritter Marker in einem dritten Einzelbild des wenigstens einen Bilddatenstroms und ein vierter Marker in einem vierten Einzelbild erkannt. Mittels der Recheneinheit werden die Positionen des dritten und des vierten Markers bestimmt. Die Last wird mittels des Hebezeugs abhängig von den Positionen des ersten, des zweiten, des dritten und des vierten Markers verladen.

Durch die zusätzliche Erkennung und Auswertung des dritten und des vierten Marker kann eine erhöhte Zuverlässigkeit des Verfahrens, eine erhöhte Geschwindigkeit oder eine Redundanz und damit eine erhöhte Sicherheit erzielt werden. Die obigen Ausführungen zu dem ersten und dem zweiten Marker gelten analog für den dritten und den vierten Marker.

Gemäß zumindest einer Ausführungsform wird das Kamerasystem während des Erzeugens des wenigstens einen Bilddatenstroms entlang der Längsrichtung des Transportfahrzeugs bewegt. Die Position des ersten Markers wird mittels der Recheneinheit in Abhängigkeit von einer ersten Momentanposition des Kamerasystems bestimmt, wenn der erste Marker erkannt wurde. Die Position des zweiten Markers wird mittels der Recheneinheit in Abhängigkeit von einer zweiten Momentanposition des Kamerasystems bestimmt, wenn der zweite Marker erkannt wurde.

Insbesondere kann das Kransystem eine Steuerung sowie ein Antriebssystem beinhalten, wobei die Steuerung das Antriebssystem zur Bewegung des Kamerasystems ansteuern kann. Dabei ist die Recheneinheit insbesondere mit der Steuerung gekoppelt.

Während der Bewegung des Kamerasystems entlang der Längsrichtung zum Erzeugen des wenigstens einen Bilddatenstroms steht das Transportfahrzeug beispielsweise still, insbesondere bezüglich des vorgegebenen Koordinatensystems.

Eine Momentanposition des Kamerasystems kann insbesondere als Position des Kamerasystems, insbesondere bezüglich des vorgegebenen Koordinatensystems, zu einem Zeitpunkt der Erkennung des jeweiligen Markers verstanden werden. Beispielsweise kann jedes Einzelbild des wenigstens einen Bilddatenstroms einer Zeitmarke (englisch "time stamp") zugeordnet sein. Die Momentanposition entspricht dann beispielsweise der Position des Kamerasystems zu einem Zeitpunkt, welcher durch die Zeitmarke des jeweiligen Einzelbildes, in dem der entsprechende Marker erkannt wurde, gegeben ist.

Die erste und die zweite Momentanposition können beispielsweise jeweiligen Positionen unterschiedlicher Komponenten oder Bestandteile des Kamerasystems entsprechen.

Insbesondere weist das Kamerasystem beispielsweise eine Kamera pro Bilddatenstrom des wenigstens einen Bilddatenstroms auf. Die erste Momentanposition des Kamerasystems entspricht dann beispielsweise einer Momentanposition derjenigen Kamera, mittels welcher der erste Marker erkannt wurde. Entsprechend ist die zweite Momentanposition beispielsweise durch eine Momentanposition derjenigen Kamera gegeben, mittels welcher der zweite Marker erkannt wurde.

In solchen Ausführungsformen wird das Transportfahrzeug also mittels des Kamerasystems abgescannt. Mit Vorteil können in dieser Weise die Marker gesucht werden, sodass eine exakte Position des Transportfahrzeugs zu Beginn des Verfahrens beziehungsweise ein Typ oder eine Länge des Transportfahrzeugs oder eine Ausdehnung der Last zu Beginn des Verfahrens nicht notwendigerweise bekannt sein müssen. Dementsprechend wird ein höherer Automatisierungsgrad ermöglicht.

Zudem wird in manchen Ausführungsformen die Positionsbestimmung der Marker allein durch die entsprechende Momentanposition des Kamerasystems ermöglicht. Wenn eine entsprechende Genauigkeit für die Positionsbestimmung für die konkrete Anwendung ausreichend ist, kann beispielsweise auf eine Bestimmung der Anordnung des jeweiligen Markers innerhalb des jeweiligen Einzelbildes verzichtet werden, um die Position der Marker zu bestimmen.

Gemäß zumindest einer Ausführungsform wird ein erster Bilddatenstrom des wenigstens einen Bilddatenstroms mittels einer an einem ersten Ende des Hebezeugs angeordneten ersten Kamera des Kamerasystems erzeugt. Zur Analyse des wenigstens einen Bilddatenstroms wird der erste Bilddatenstrom mittels der Recheneinheit anhand des neuronalen Netzes analysiert. Der erste Marker wird mittels der Recheneinheit basierend auf der Analyse des ersten Bilddatenstroms in dem ersten Einzelbild erkannt. Die erste Momentanposition entspricht dabei einer Momentanposition der ersten Kamera.

Bei dem ersten Ende des Hebezeugs handelt es sich insbesondere um ein erstes Längsende, also ein erstes Ende bezüglich einer Längsrichtung des Hebezeugs. Die Längsrichtung des Hebezeugs kann, insbesondere während des Verfahrens oder während dem Abscannen, beispielsweise der Längsrichtung des Transportfahrzeugs entsprechen oder näherungsweise entsprechen.

Bei dem ersten Einzelbild handelt es sich insbesondere um ein Einzelbild des ersten Bilddatenstroms.

Gemäß zumindest einer Ausführungsform wird ein zweiter Bilddatenstrom des wenigstens einen Bilddatenstroms mittels einer an einem zweiten, dem ersten Ende gegenüberliegenden, Ende des Hebezeugs angeordneten zweiten Kamera des Kamerasystems erzeugt. Zur Analyse des wenigstens einen Bilddatenstroms wird der zweite Bilddatenstrom mittels der Recheneinheit anhand des neuronalen Netzes analysiert. Der zweite Marker wird mittels der Recheneinheit basierend auf der Analyse des zweiten Bilddatenstroms in dem zweiten Einzelbild erkannt. Die zweite Momentanposition entspricht dabei einer Momentanposition der zweiten Kamera.

Das zweite Einzelbild ist insbesondere ein Einzelbild des zweiten Bilddatenstroms.

Dadurch, dass zur Erkennung der Marker jeweils eine eigene Kamera vorgesehen wird, wird der Scanvorgang beschleunigt, da nicht das gesamte Transportfahrzeug abgescannt werden muss, das Kamerasystem also nicht über die gesamte Länge des Transportfahrzeugs bewegt werden muss.

Gemäß zumindest einer Ausführungsform wird ein dritter Bilddatenstrom des wenigstens einen Bilddatenstroms mittels einer an dem ersten Ende des Hebezeugs angeordneten dritten Kamera des Kamerasystems erzeugt. Der dritte Bilddatenstrom wird mittels der Recheneinheit anhand des neuronalen Netzes analysiert. Der dritte Marker wird mittels der Recheneinheit basierend auf der Analyse des dritten Bilddatenstroms in dem dritten Einzelbild erkannt. Die Position des dritten Markers wird mittels der Recheneinheit in Abhängigkeit von einer dritten Momentanposition des Kamerasystems, welche einer Momentanposition der dritten Kamera entspricht, bestimmt, wenn der dritte Marker erkannt wurde.

Gemäß zumindest einer Ausführungsform wird ein vierter Bilddatenstrom des wenigstens einen Bilddatenstroms mittels einer an dem zweiten Ende des Hebezeugs angeordneten vierten Kamera des Kamerasystems erzeugt. Der vierte Bilddatenstrom wird mittels der Recheneinheit anhand des neuronalen Netzes analysiert und der erste Marker wird mittels der Recheneinheit basierend auf der Analyse des vierten Bilddatenstroms in dem vierten Einzelbild erkannt. Die Position des vierten Markers wird mittels der Recheneinheit in Abhängigkeit von einer vierten Momentanposition des Kamerasystems, welche einer Momentanposition der vierten Kamera entspricht, bestimmt, wenn der vierte Marker erkannt wurde.

In solchen Ausführungsformen werden also an jedem Längsende des Transportfahrzeugs jeweils zwei Marker erkannt. Dabei kann die Erkennung des dritten und des vierten Markers beispielsweise als redundant zu der Erkennung des ersten beziehungsweise des zweiten Markers angesehen werden. Dadurch kann eine Stabilität und Zuverlässigkeit des Verfahrens erhöht werden.

Gemäß zumindest einer Ausführungsform beinhaltet der erste Marker einen Puffer oder Pufferteller des Transportfahrzeugs, insbesondere wenn das Transportfahrzeug als Zugwaggon ausgestaltet ist oder einen solchen aufweist. Alternativ oder zusätzlich kann der erste Marker ein Lastfixierungsmittel beinhalten, mit dem beispielsweise ein auf dem Transportfahrzeug abgesetzter Container fixiert oder positioniert werden kann. Solche Lastfixierungsmittel können auch als Pins bezeichnet werden.

Gemäß zumindest einer Ausführungsform wird der Puffer und/oder das Lastfixierungsmittel basierend auf der Analyse des wenigstens einen Bilddatenstroms, insbesondere des ersten Bilddatenstroms, anhand des neuronalen Netzes als der erste Marker erkannt.

Gemäß zumindest einer Ausführungsform beinhaltet der zweite Marker einen weiteren Puffer des Transportfahrzeugs und/oder ein weiteres Lastfixierungsmittel des Transportfahrzeugs.

Gemäß zumindest einer Ausführungsform wird der weitere Puffer und/oder das weitere Lastfixierungsmittel des Transportfahrzeugs basierend auf der Analyse des wenigstens einen Bilddatenstroms, insbesondere des zweiten Bilddatenstroms, anhand des neuronalen Netzes als der zweite Marker erkannt.

Entsprechende Ausführungsformen ergeben sich direkt auch für den dritten und/oder vierten Marker.

Die einzelnen Marker können also insbesondere einen Puffer oder ein Lastfixierungsmittel beinhalten oder eine Kombination aus dem Puffer und dem Lastfixierungsmittel.

Die Verwendung von Puffern für die Marker hat insbesondere den Vorteil, dass Zugwaggons als Transportfahrzeuge in aller Regel solche Puffer aufweisen. Zudem sind die Puffer immer an jeweiligen Längsenden des Zugwaggons angeordnet, sodass sie sich als Marker besonders gut eignen. Darüber hinaus ist die geometrische Form der Puffer von Zugwaggons vergleichsweise einheitlich. Zudem hat sich herausgestellt, dass sich neuronale Netze gut zur Erkennung von Puffern in den Bilddatenströmen eignen.

Die Verwendung von Lastfixierungsmitteln für die Puffer hat insbesondere den Vorteil, dass Transportfahrzeuge zum Transport von Containern in aller Regel solche Lastfixierungsmittel aufweisen, um die Container fixieren oder definiert positionieren zu können. Auch die Lastfixierungsmittel befinden sich mit Vorteil in der Regel an jeweiligen Längsenden von Zugwaggons beziehungsweise Lkw-Anhängern. Auch die Lastfixierungsmittel lassen sich anhand des neuronalen Netzes zuverlässig erkennen.

Das neuronale Netz ist insbesondere zur Erkennung von Puffern und/oder Lastfixierungsmitteln in den Bilddatenströmen trainiert.

Gemäß zumindest einer Ausführungsform wird die Position des ersten Markers mittels der Recheneinheit in Abhängigkeit von einer Anordnung des ersten Markers in dem ersten Einzelbild bestimmt.

Gemäß zumindest einer Ausführungsform wird die Position des zweiten Markers mittels der Recheneinheit in Abhängigkeit von einer Anordnung des zweiten Markers in dem zweiten Einzelbild bestimmt.

Gemäß zumindest einer Ausführungsform wird die Position des dritten Markers mittels der Recheneinheit in Abhängigkeit von einer Anordnung des dritten Markers in dem dritten Einzelbild bestimmt und/oder die Position des vierten Markers mittels der Recheneinheit in Abhängigkeit von einer Anordnung des vierten Markers in dem vierten Einzelbild bestimmt.

Unter der Anordnung eines der Marker in dem jeweiligen Einzelbild kann eine Anordnung der entsprechenden Abbildung des jeweiligen Markers in dem entsprechenden Einzelbild verstanden werden. Die Anordnung beziehungsweise die Position der Abbildung des Markers in dem Einzelbild kann nach oder bei der Erkennung des Markers beispielsweise anhand des neuronalen Netzes oder anhand eines weiteren Softwaremoduls der Recheneinheit bestimmt werden.

Ausführungsformen, bei denen die Position des jeweiligen Markers abhängig von dessen Anordnung im Einzelbild bestimmt wird, sind insbesondere vorteilhaft in Kombination mit solchen Ausführungsformen, bei denen jeweilige Momentanposition des Kamerasystems zur Positionsbestimmung des Markers herangezogen wird. Insbesondere durch die Kombination der Momentanposition des Kamerasystems mit der Anordnung des jeweiligen Markers in dem entsprechenden Einzelbild kann die Position des entsprechenden Markers bezüglich des vorgegebenen Koordinatensystems mit hoher Genauigkeit bestimmt werden.

Gemäß zumindest einer Ausführungsform wird basierend auf den Positionen des ersten und des zweiten Markers mittels der Recheneinheit ein Abstand oder erster Abstand des ersten und des zweiten Markers voneinander bestimmt. Die Last wird mittels des Hebezeugs abhängig von dem Abstand verladen.

Der Abstand entspricht insbesondere einem Abstand entlang der Längsachse des Transportfahrzeugs.

Beinhaltet einer der Marker mehrere Objekte, beispielsweise einen Puffer und ein Lastfixierungsmittel, so kann die Position des Markers ebenfalls eindeutig definiert sein. Beispielsweise kann es sich dabei um die Position eines der beiden Objekte oder um eine mittlere Position der Objekte handeln.

Gemäß zumindest einer Ausführungsform wird mittels der Recheneinheit basierend auf den Positionen des dritten und des vierten Markers ein weiterer oder zweiter Abstand des dritten und des vierten Markers voneinander bestimmt. Die Last wird mittels des Hebezeugs abhängig von dem Abstand und von dem weiteren Abstand verladen.

Die Bestimmung des Weiteren Abstands kann beispielsweise als redundant zur Bestimmung des Abstandes angesehen werden.

Gemäß zumindest einer Ausführungsform wird basierend auf den Positionen des ersten und des vierten Markers ein dritter Abstand des ersten und des vierten Markers voneinander bestimmt und/oder es wird basierend auf den Positionen des zweiten und des dritten Markers ein vierter Abstand des zweiten und des dritten Markers voneinander bestimmt. Die Last wird mittels des Hebezeugs abhängig von dem ersten, dem zweiten, dem dritten und/oder dem vierten Abstand bestimmt.

Insbesondere reicht einer der vier Abstände aus, um die Last mittels des Hebezeugs automatisiert zu verladen. Dementsprechend kann eine Zuverlässigkeit des Verfahrens dadurch weiter erhöht werden, dass auch in dem Fall, dass einzelne der Marker nicht erkannt werden, weiterhin wenigstens einer der Abstände bestimmt und zum automatisierten Verladen herangezogen werden kann.

Gemäß zumindest einer Ausführungsform ist die Recheneinheit dazu eingerichtet, basierend auf wenigstens einem der Abstände einen Typ des Transportfahrzeugs und/oder der Last, insbesondere eine Länge des Transportfahrzeugs und/oder der Last, zu bestimmen. Zudem kann aus dem Abstand auch eine Höhe der Last oder der Kombination aus Transportfahrzeug und Last bestimmt werden.

Aufgrund entsprechender Normvorgaben kann anhand der bestimmten Abstände der entsprechende Waggontyp oder der Typ der Last eindeutig bestimmt werden. Gegebenenfalls können zur eindeutigen Bestimmung auch weitere Informationen aus der Analyse des wenigstens einen Bilddatenstroms herangezogen werden, beispielsweise die Anordnung der Lastfixierungsmittel auf dem Transportfahrzeug.

Gemäß zumindest einer Ausführungsform wird wenigstens ein Arbeitsparameter des Hebezeugs, des Antriebssystems, der Steuerung und/oder des Kransystems abhängig von den Positionen des ersten, des zweiten, des dritten und/oder des vierten Markers und/oder des ersten, des zweiten, des dritten und/oder des vierten Abstands mittels der Steuerung des Kransystems eingestellt, um die Last automatisiert zu verladen.

Die Recheneinheit kann insbesondere Informationen betreffend den Typ des Transportfahrzeugs, beispielsweise die Länge des Transportfahrzeugs, oder betreffend die Positionen oder Abstände der Marker an die Steuerung übermitteln. Die Steuerung kann dann abhängig davon einen entsprechend der eingestellten Arbeitsparameter definierten Auftrag an das Antriebssystem übermitteln, sodass die Last verladen wird.

Der wenigstens eine Arbeitsparameter beinhaltet insbesondere eine Ausfahrlänge des Hebezeugs und/oder eine Absenkhöhe des Hebezeugs. Der wenigstens eine Arbeitsparameter kann auch eine Absenkgeschwindigkeit oder Hebegeschwindigkeit und/oder eine Drehzahl des Antriebs beinhalten.

Gemäß einem weiteren unabhängigen Aspekt des verbesserten Konzepts wird auch ein Kransystem zum Verladen einer Last angegeben. Das Kransystem weist ein Kamerasystem, eine Recheneinheit mit einem künstlichen neuronalen Netz, eine Steuerung sowie ein Hebezeug auf. Das Kamerasystem ist dazu eingerichtet, wenigstens einen Bilddatenstrom zu erzeugen. Die Recheneinheit ist dazu eingerichtet, den wenigstens einen Bilddatenstrom anhand des neuronalen Netzes zu analysieren. Die Recheneinheit ist dazu eingerichtet, basierend auf der Analyse des wenigstens einen Bilddatenstroms einen ersten Marker in einem ersten Einzelbild des wenigstens einen Bilddatenstroms und einen zweiten Marker in einem zweiten Einzelbild des wenigstens einen Bilddatenstroms zu erkennen. Die Recheneinheit ist dazu eingerichtet, eine Position des ersten Markers und eine Position des zweiten Markers zu bestimmen. Die Steuerung, welche beispielsweise eine Steuereinheit oder ein Steuergerät beinhaltet, ist dazu eingerichtet, das Hebezeug abhängig von den Positionen der Marker anzusteuern, um die Last automatisiert zu verladen.

Die Steuerung ist insbesondere mit der Recheneinheit gekoppelt, beispielsweise über eine Internetprotokoll-, IP-, Verbindung.

Die Steuerung kann die Recheneinheit ganz oder teilweise beinhalten oder umgekehrt.

Gemäß zumindest einer Ausführungsform weist das Kransystem ein Antriebssystem auf und die Steuerung kann das Antriebssystem ansteuern, um das Hebezeug zu bewegen. Das Antriebssystem beinhaltet insbesondere einen Motor und ein Getriebe.

Gemäß zumindest einer Ausführungsform des Kransystems ist die Steuerung dazu eingerichtet, das Kamerasystem während des Erzeugens des wenigstens einen Bilddatenstroms entlang einer Längsrichtung eines Transportfahrzeugs zu bewegen. Die Recheneinheit ist dazu eingerichtet, die Position des ersten Markers in Abhängigkeit von einer ersten Momentanposition des Kamerasystems zu bestimmen, wenn der erste Marker erkannt wurde. Die Recheneinheit ist dazu eingerichtet, die Position des zweiten Markers in Abhängigkeit von einer zweiten Momentanposition des Kamerasystems zu bestimmen, wenn der zweite Marker erkannt wurde.

Gemäß zumindest einer Ausführungsform des Kransystems ist die Steuerung dazu eingerichtet, das Antriebssystem oder ein weiteres Antriebssystem des Kransystems anzusteuern, um das Kamerasystem entlang der Längsrichtung des Transportfahrzeugs zu bewegen.

Gemäß zumindest einer Ausführungsform weist das Kamerasystem eine an einem ersten Ende des Hebezeugs angeordnete erste Kamera auf, um einen ersten Bilddatenstrom des wenigstens einen Bilddatenstroms zu erzeugen. Die Recheneinheit ist dazu eingerichtet, zur Analyse des wenigstens einen Bilddatenstroms den ersten Bilddatenstrom anhand des neuronalen Netzes zu analysieren und den ersten Marker basierend auf der Analyse des ersten Bilddatenstroms zu erkennen. Die erste Momentanposition entspricht dabei einer Momentanposition der ersten Kamera.

Gemäß zumindest einer Ausführungsform weist das Kamerasystem eine an einem zweiten, dem ersten Ende gegenüberliegenden, Ende des Hebezeugs angeordnete zweite Kamera auf, um einen zweiten Bilddatenstrom des wenigstens einen Bilddatenstroms zu erzeugen. Die Recheneinheit ist dazu eingerichtet, zur Analyse des wenigstens einen Bilddatenstroms den zweiten Bilddatenstrom anhand des neuronalen Netzes zu analysieren und den zweiten Marker basierend auf der Analyse des zweiten Bilddatenstroms zu erkennen. Die zweite Momentanposition entspricht dabei einer Momentanposition der zweiten Kamera.

Gemäß zumindest einer Ausführungsform weist das Kamerasystem eine an dem ersten Ende des Hebezeugs angeordnete dritte Kamera auf, um einen dritten Bilddatenstrom zu erzeugen, sowie eine an dem zweiten Ende des Hebezeugs angeordnete vierte Kamera, um einen vierten Bilddatenstrom zu erzeugen. Die Recheneinheit ist dazu eingerichtet, den dritten und den vierten Bilddatenstrom anhand des neuronalen Netzes zu analysieren. Die Recheneinheit ist dazu eingerichtet, basierend auf der Analyse des dritten Bilddatenstroms einen dritten Marker in einem dritten Einzelbild des dritten Bilddatenstroms zu erkennen und basierend auf der Analyse des vierten Bilddatenstroms einen vierten Marker in einem vierten Einzelbild des vierten Bilddatenstroms zu erkennen. Die Recheneinheit ist dazu eingerichtet, eine Position des dritten Markers in Abhängigkeit von einer dritten Momentanposition der dritten Kamera zu bestimmen, wenn der dritte Marker erkannt wurde und eine Position des vierten Markers in Abhängigkeit von einer vierten Momentanposition der vierten Kamera zu bestimmen, wenn der vierte Marker erkannt wurde. Die Steuerung ist dazu eingerichtet, das Hebezeug des Kransystems abhängig von den Positionen des ersten, des zweiten, des dritten und des vierten Markers anzusteuern, um die Last automatisiert zu verladen.

Gemäß zumindest einer Ausführungsform weist das Hebezeug eine rechteckige oder im Wesentlichen rechteckige Grundform auf und die erste und die zweite Kamera sind an jeweiligen Ecken der rechteckigen Grundform angeordnet.

Gemäß zumindest einer Ausführungsform sind die dritte und die vierte Kamera an weiteren jeweiligen Ecken der rechteckigen Grundform angeordnet. Die vier Kameras sind also an vier unterschiedlichen Ecken der rechteckigen Grundform angeordnet.

Das Hebezeug kann beispielsweise als Containergeschirr ausgestaltet sein. Das Hebezeug kann beispielsweise einen H-förmigen oder im Wesentlichen rechteckigen Teleskoprahmen aufweisen, wobei der Teleskoprahmen beispielsweise die rechteckige Grundform des Hebezeugs definiert.

Gemäß zumindest einer Ausführungsform ist das Kransystem als Containerkran oder Containerbrücke, insbesondere zum Umschlagen oder Verladen von Iso-Containern, ausgebildet.

Weitere Ausführungsformen des Kransystems nach dem verbesserten Konzept ergeben sich unmittelbar aus den beschriebenen Ausgestaltungsformen des Verfahrens zum Verladen einer Last nach dem verbesserten Konzept und umgekehrt. Insbesondere lassen sich einzelne Merkmale und entsprechende Erläuterungen bezüglich der verschiedenen Ausführungsformen zu dem Verfahren nach dem verbesserten Konzept analog auf entsprechende Ausführungsformen des Kransystems nach dem verbesserten Konzept übertragen. Beispielsweise kann ein Kransystem nach dem verbesserten Konzept dazu eingerichtet oder programmiert sein, ein Verfahren nach dem verbesserten Konzept durchzuführen oder das Kransystem führt ein Verfahren nach dem verbesserten Konzept durch.

Gemäß einem weiteren unabhängigen Aspekt des verbesserten Konzepts wird ein Trainingsverfahren zum Trainieren eines Kransystems zum Verladen einer Last, insbesondere zum Trainieren eines Kransystems nach dem verbesserten Konzept, oder eines künstlichen neuronalen Netzes für ein solches Kransystem oder Verfahren angegeben. Dazu wird mittels eines Kamerasystems des Kransystems wenigstens ein Trainingsbilddatenstrom erzeugt und mittels eines untrainierten oder vortrainierten künstlichen neuronalen Netzes analysiert. Insbesondere werden mittels eines Bedieners Referenzeinzelbilder aus dem wenigstens einen Bilddatenstrom ausgewählt, auf denen jeweils Marker einer vorgegebenen Art abgebildet sind. Die ausgewählten Einzelbilder werden als Referenz, insbesondere Positivreferenz, für das neuronale Netz vorgegeben, um das neuronale Netz zu trainieren.

Gemäß zumindest einer Ausführungsform des Verfahrens zum Verladen einer Last nach dem verbesserten Konzept ist das Kransystem beziehungsweise das künstliche neuronale Netz anhand eines Trainingsverfahrens nach dem verbesserten Konzept trainiert worden.

Gemäß zumindest einer Ausführungsform des Verfahrens zum Verladen einer Last nach dem verbesserten Konzept enthält das Verfahren die Verfahrensschritte einer Ausführungsform des Trainingsverfahrens zum Trainieren eines Kransystems zum Verladen einer Last nach dem verbesserten Konzept. Dabei wird der Bilddatenstrom als Trainingsbilddatenstrom verwendet. Dadurch kann das neuronale Netz mit Vorteil während des produktiven Betriebs weiter trainiert werden, sodass die Genauigkeit der Analyse im Normalbetrieb kontinuierlich verbessert werden kann.

Gemäß zumindest einer Ausführungsform des Kransystems nach dem verbesserten Konzept ist das Kransystem beziehungsweise das neuronale Netz des Kransystems anhand eines Trainingsverfahrens nach dem verbesserten Konzept trainiert worden.

Gemäß einem weiteren unabhängigen Aspekt des verbesserten Konzepts wird ein Computerprogramm mit Befehlen angegeben. Die Befehle veranlassen bei Ausführung des Computerprogramms durch ein Kransystem nach dem verbesserten Konzept, insbesondere durch eine Recheneinheit des Kransystems, das Kransystem dazu, ein Verfahren zum Verladen einer Last nach dem verbesserten Konzept durchzuführen.

Gemäß einem weiteren unabhängigen Aspekt des verbesserten Konzepts wird ein computerlesbares Speichermedium angegeben, auf welchem ein Computerprogramm nach dem verbesserten Konzept gespeichert ist.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- FIG 1: eine schematische Darstellung einer beispielhaften Ausführungsform eines Kransystems nach dem verbesserten Konzept;
- FIG 2: ein schematisches Ablaufdiagramm einer beispielhaften Ausführungsform eines Verfahrens zum Verladen einer Last nach dem verbesserten Konzept; und
- FIG 3: beispielhafte Einzelbilder in einer weiteren beispielhaften Ausführungsform eines Verfahrens nach dem verbesserten Konzept.

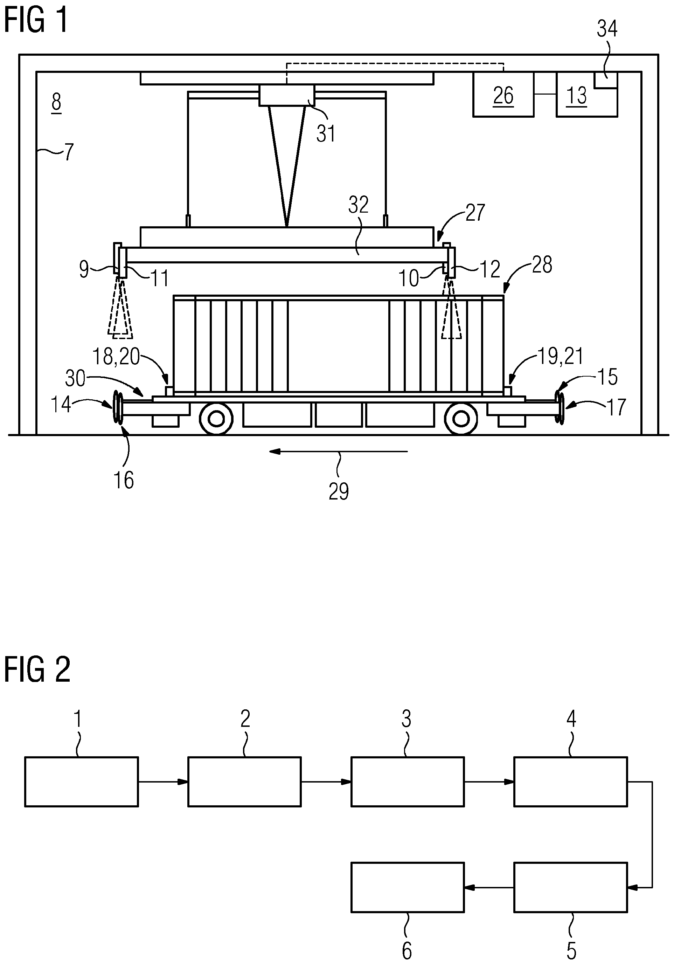

In FIG 1 ist eine beispielhafte Ausführungsform eines Kransystems 8 nach dem verbesserten Konzept gezeigt. Das Kransystem 8 ist beispielsweise als Containerkran ausgebildet und weist insbesondere ein Gestell 7 auf. Das Kransystem 8 weist außerdem ein Containergeschirr 27 auf, welches, beispielsweise über eine Laufkatze 31, beweglich mit dem Gestell 7 verbunden ist.

Das Kransystem 8 weist außerdem eine Steuerung 26 auf, die dazu eingerichtet ist, die Laufkatze 31 zur Bewegung des Containergeschirrs 27 anzusteuern. Außerdem kann die Steuerung 26 das Containergeschirr 27 beispielsweise derart ansteuern, dass sich eine Ausfahrlänge eines Teleskoprahmens 32 des Containergeschirrs 27 einstellen lässt. Zudem kann die Steuerung 26 beispielsweise eine Höhe des Containergeschirrs 27 steuern.

Der Teleskoprahmen 32 des Containergeschirrs 27 weist beispielsweise eine rechteckige Grundform auf. Das Kransystem 8 weist beispielsweise an jedem Eck des Teleskoprahmens 32 eine Kamera 9, 10, 11, 12 auf, wobei die Kameras 9, 10, 11, 12 jeweils derart angeordnet und ausgerichtet sind, dass deren Blickrichtung nach unten, insbesondere in Richtung eines Transportfahrzeugs 30, welches in FIG 1 beispielsweise als Zugwaggon ausgestaltet ist, zeigt.

Die Kameras 9, 10, 11, 12 können beispielsweise in jeweiligen Stahlgehäusen untergebracht sein, um eine Beeinträchtigung durch Regen oder Schmutz möglichst gering zu halten. Beispielsweise weisen die Kameras 9, 10, 11, 12 jeweils Objektive auf, beispielsweise jeweils in einem Winkel von 20 bis 25 Grad, insbesondere etwa 22 Grad.

Das Transportfahrzeug 30 weist an einem ersten Ende einen ersten Puffer 14 und einen dritten Puffer 16 auf sowie an einem gegenüberliegenden zweiten Ende einen zweiten Puffer 15 und einen vierten Puffer 17. Das Transportfahrzeug 30 kann sich beispielsweise entlang einer Längsrichtung 29 des Transportfahrzeugs 30, welche beispielsweise einer Schienenausrichtung entspricht, bewegen.

Das Transportfahrzeug 30 trägt beispielsweise einen Container 28, insbesondere einen genormten ISO-Container. Zur Fixierung oder Positionierung des Containers 28 auf dem Transportfahrzeug 30 weist das Transportfahrzeug 30 optional ein erstes Lastfixierungsmittel 18 und ein drittes Lastfixierungsmittel 20 an dem ersten Ende sowie ein zweites Lastfixierungsmittel 19 und ein viertes Lastfixierungsmittel 21 am zweiten Ende des Transportfahrzeugs 30 auf.

Das Kransystem 8 weist außerdem eine Recheneinheit 13 auf, welche beispielsweise mit der Steuerung 26 gekoppelt ist. Auf der Recheneinheit 13 ist ein künstliches neuronales Netz gespeichert. Das neuronale Netz ist zur Mustererkennung in Bilddaten, insbesondere Kamerabildern, trainiert worden. Insbesondere ist das neuronale Netz dazu trainiert worden, Abbildungen der Puffer 14, 15, 16, 17 und/oder Abbildungen der Lastfixierungsmittel 18, 19, 20, 21 in jeweiligen Bilddatenströmen der Kameras 9, 10, 11, 12 zu erkennen.

Des Weiteren kann die Recheneinheit 13 ein computerlesbares Speichermedium 34 nach dem verbesserten Konzept aufweisen, auf dem ein Computerprogramm nach dem verbesserten Konzept gespeichert ist.

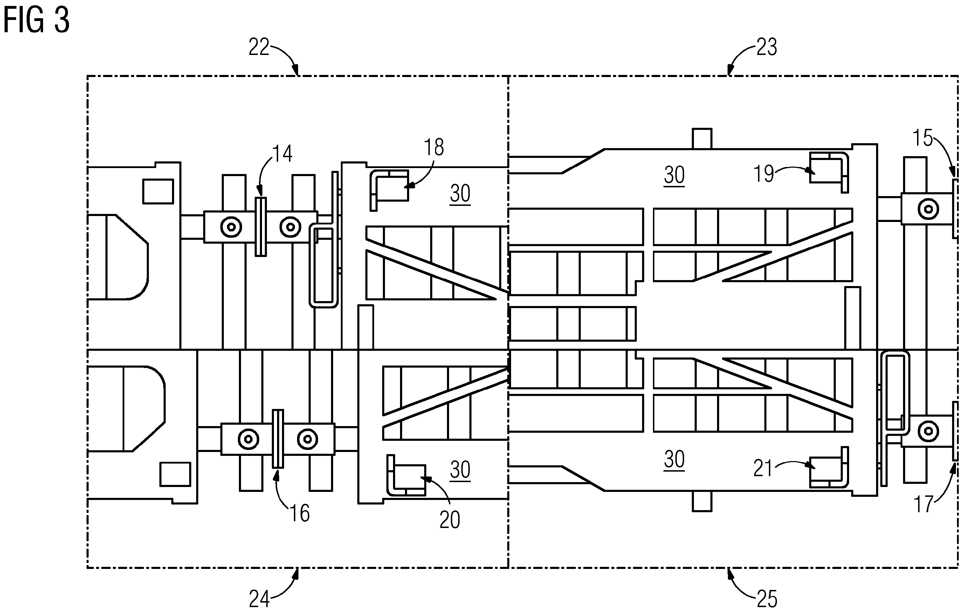

Die Funktionsweise des Kransystems 8 wird im Folgenden unter Bezugnahme auf FIG 2 und FIG 3 näher erläutert.

In FIG 2 ist ein beispielhaftes Ablaufdiagramm eines Verfahrens zum Verladen einer Last nach dem verbesserten Konzept gezeigt.

In Schritt 1 des Verfahrens werden mittels der Kameras 9, 10, 11, 12 jeweilige Bilddatenströme erzeugt. Dazu wird das Containergeschirr 27 über das Transportfahrzeug 30 hinwegbewegt, insbesondere entlang der Längsrichtung 29. Die Bilddatenströme können beispielsweise anhand der jeweiligen Kamerasignale als Livestream auf die Recheneinheit 13 übertragen werden. Die Recheneinheit 13 kann die Bilddatenströme digital oder analog einlesen und in Schritt 2 des Verfahrens anhand des neuronalen Netzes analysieren.

Der Scanvorgang in Schritt 1 kann beispielsweise von der Steuerung 26 oder einer Automatisierungseinheit des Krans, welche mit der Recheneinheit 13 und der Steuerung 26 gekoppelt ist, gestartet werden. Dabei kann beispielsweise gewährleistet werden, dass sich das Transportfahrzeug 30 auf einer stationären Position befindet und zunächst nicht mehr bewegt wird, insbesondere während des gesamten Scanvorgangs.

Während des Scanvorgangs empfängt die Recheneinheit 13 beispielsweise von der Steuerung 26 oder der Automatisierungseinheit die jeweilige Mittelposition des Containergeschirrs 27. Insbesondere erhält die Recheneinheit 13 die Mittelposition des Containergeschirrs 27 für jedes Einzelbild der Bilddatenströme oder für einen vorgegebenen Anteil der Einzelbilder.

Je nachdem, mit welcher Rate die Mittelposition bereitgestellt wird, kann auch mehreren Einzelbildern dieselbe Mittelposition zugeordnet werden. Beispielsweise kann die Rate, mit der die Mittelposition bereitgestellt wird, abhängig von einer Scangeschwindigkeit, also von einer Bewegungsgeschwindigkeit des Containergeschirrs 27, gewählt werden.

Als Beispiel kann etwa alle 100 ms die Mittelposition bereitgestellt werden, wenn die Geschwindigkeit des Containergeschirrs 27 beziehungsweise die Scangeschwindigkeit 0,3 Meter pro Sekunde beträgt. Dies hat sich als vorteilhaft für eine Genauigkeit des Verfahrens herausgestellt.

In Schritt 2 des Verfahrens analysiert die Recheneinheit die Bilddatenströme der Kameras 9, 10, 11, 12.

Zu einem bestimmten Zeitpunkt liegt beispielsweise der erste Puffer 14 im Blickbereich der ersten Kamera 9. Das neuronale Netz erkennt in einem entsprechenden Einzelbild des zugehörigen Bilddatenstroms, dass der vorgegebene Marker abgebildet ist. Analog befindet sich zu entsprechenden Zeitpunkten der zweite Puffer 15 im Blickbereich der zweiten Kamera 10, der dritte Puffer 16 im Blickbereich der dritten Kamera 11 und der vierte Puffer 17 im Blickbereich der vierten Kamera 12. Das neuronale Netz erkennt in den entsprechenden Bilddatenströmen jeweils das Vorliegen eines vorgegebenen Markers.

In Schritt 3 des Verfahrens werden mittels der Recheneinheit 13 entsprechende Positionen der Puffer 14, 15, 16, 17 bezüglich eines Referenzkoordinatensystems, welches beispielsweise durch das Gestell 7 fixiert ist, bestimmt. Dazu können insbesondere anhand der jeweils eingestellten Ausfahrlänge des Containergeschirrs 27 und der aktuellen Mittelposition des Containergeschirrs 27 die jeweiligen Mittelpositionen der Puffer 14, 15, 16, 17 berechnet werden. In die Berechnung der Mittelpositionen der Puffer 14, 15, 16, 17 kann optional auch eine Anordnung der Marker innerhalb der jeweiligen Einzelbilder berücksichtigt werden, um die Genauigkeit zu erhöhen.

In Schritt 4 des Verfahrens werden aus den bestimmten Positionen der Puffer 14, 15, 16, 17 entsprechende Abstände zwischen dem ersten Puffer 14 und dem zweiten Puffer 15 beziehungsweise zwischen dem dritten Puffer 16 und dem vierten Puffer 17 bestimmt. Durch die Berücksichtigung der Detektionsergebnisse der Kamerapaare aus erster und zweiter Kamera 9, 10 sowie aus dritter und vierter Kamera 11, 12 wird eine besonders hohe Stabilität des Verfahrens erreicht.

Aus den bestimmten Abständen kann in Schritt 5 des Verfahrens mittels der Recheneinheit 13 oder mittels der Automatisierungseinheit eine genaue Länge des Transportfahrzeugs 30 und basierend darauf ein genauer Typ des Transportfahrzeugs 30 bestimmt werden, beispielsweise über hinterlegte Daten in einer Datenbank in der Recheneinheit 13 oder der Automatisierungseinheit.

In Schritt 6 des Verfahrens wird die Information über den genauen Wagentyp genutzt, um die Last 28 automatisiert mittels des Containergeschirrs 27 zu verladen. Dazu können beispielsweise abhängig von dem Containertyp Arbeitseinstellungen des Containergeschirrs 27 oder des Kransystems 8 eingestellt werden. Alternativ oder zusätzlich kann eine logistische Koordination der Verladung anhand des Waggontyps erfolgen.

Die entsprechenden Informationen zur automatisierten Verladung können beispielsweise mittels der Steuerung 26, der Recheneinheit 13 oder der Automatisierungseinheit bereitgestellt werden oder von einem übergeordneten Kranmanagementsystem.

Anstelle der Puffer 14, 15, 16, 17 oder zusätzlich zu diesen können die Lastfixierungsmittel 18, 19, 20, 21 als vorgegebene Marker oder Muster zur Erkennung durch das neuronale Netz verwendet werden.

In FIG 3 sind beispielhafte Einzelbilder 22, 23, 24, 25 der Kameras 9, 10, 11, 12 gezeigt, wobei das erste Einzelbild 22 einem Einzelbild der Kamera 9, das zweite Einzelbild 23 einem Einzelbild der zweiten Kamera 10, das dritte Einzelbild 24 einem Einzelbild der dritten Kamera 11 und das vierte Einzelbild 25 einem Einzelbild der vierten Kamera 12 entspricht.

In FIG 3 ist beispielsweise das Transportfahrzeug 30 ohne die Last 28 gezeigt.

Bei den Einzelbildern 22, 23, 24, 25 kann es sich beispielsweise um Trainingsbilder zum Training des neuronalen Netzes während eines Trainingsverfahrens nach dem verbesserten Konzept handeln.

Zur Erstellung von Trainingsdaten für das Trainieren des neuronalen Netzes werden den Einzelbildern 22, 23, 24, 25 jeweilige Labelinformationen zugeordnet, also entsprechende Informationen darüber, wo im Bild sich das gewünschte Suchmuster befindet.

Die Einzelbilder 22, 23, 24, 25 können zum Zwecke des Trainings beispielsweise direkt aus einer Videosequenz, also einem entsprechenden Trainingsbilddatenstrom, extrahiert und gespeichert werden. Dazu kann ein Bediener beispielsweise Bounding-Boxen an entsprechenden Positionen der Puffer 14, 15, 16, 17 beziehungsweise der Lastfixierungsmittel 18, 19, 20, 21 positionieren, um entsprechende Gewichte des neuronalen Netzes anzupassen.

Das Trainieren des neuronalen Netzes kann beispielsweise mittels einer CPU oder GPU erfolgen. Das Trainieren kann beispielsweise basierend auf einem Cloudrechner oder einem sonstigen Rechnersystem extern zum Kransystem erfolgen, da zum Trainieren des neuronalen Netzes große Rechenkapazitäten erforderlich sein können.

Gemäß dem verbesserten Konzept wird eine teilweise oder vollständig automatisierte Verladung einer Last mittels eines Kransystems ermöglicht. Durch den Einsatz des neuronalen Netzes wird eine besonders hohe Zuverlässigkeit, Sicherheit und Geschwindigkeit des Verfahrens ermöglicht. Insbesondere hat sich gezeigt, dass die Markerpositionen anhand des verbesserten Konzepts mit einer Genauigkeit von 1 - 2 cm bestimmt werden können.

Störeinflüsse können weiter minimiert werden, wenn zusätzliche Informationen aus der Kranautomatisierung zur Verfügung stehen, wie beispielsweise ein zu erwartender Typ des Transportfahrzeugs beziehungsweise eine zu erwartende Höhe des Transportfahrzeugs beziehungsweise der Last auf dem Transportfahrzeug. Mithilfe von Plausibilitätsprüfungen können falsch erkannte Positionen, welche beispielsweise durch Schmutz oder Wettereinflüsse verursacht werden, verworfen werden, um die Stabilität der Auswertung zu erhöhen. Dies kann beispielsweise durch das Vorsehen der redundanten Kamerapaare ermöglicht werden.

Als Kameras können beispielsweise Analog- oder IP-Kameras verwendet werden. Diese Kameras können beispielsweise zur Fernsteuerung ohnehin auf dem Kran installiert sein, sodass für die Kameras keine zusätzlichen Kosten für Hardware und Installation anfallen.

Weitere Vorteile des verbesserten Konzepts sind relativ geringe Anschaffungskosten und ein geringer Zeitaufwand bei der Inbetriebnahme und Kalibrierung des Systems. Auch ein Wartungsaufwand ist durch die Verwendung der Kameras und gegebenenfalls entsprechender Schutzgehäuse gering. Durch die Verwendung des neuronalen Netzes wird eine besonders hohe Detektionsrate und Zuverlässigkeit erzielt.

## Patentansprüche

1. Verfahren zum Verladen einer Last (28) mit einem Kransystem (8), wobei
mittels eines Kamerasystems (9, 10, 11, 12) des Kransystems (8) wenigstens ein Bilddatenstrom erzeugt wird; **dadurch gekennzeichnet, dass** der wenigstens eine Bilddatenstrom mittels einer Recheneinheit (13) des Kransystems (8) anhand eines künstlichen neuronalen Netzes analysiert wird;
mittels der Recheneinheit (13) basierend auf der Analyse ein erster Marker (14, 18) in einem ersten Einzelbild (22) des wenigstens einen Bilddatenstroms und ein zweiter Marker (15, 19) in einem zweiten Einzelbild (23) des wenigstens einen Bilddatenstroms erkannt werden;
mittels der Recheneinheit (13) eine Position des ersten Markers (14, 18) und eine Position des zweiten Markers (15, 19) bestimmt werden; und
die Last (28) mittels eines Hebezeugs (27) des Kransystems (8) abhängig von den Positionen der Marker (14, 15, 18, 19) automatisiert verladen wird.

2. Verfahren nach Anspruch 1,
**dadurch gekennzeichnet, dass** das Kamerasystem (9, 10, 11, 12) während des Erzeugens des wenigstens einen Bilddatenstroms entlang einer Längsrichtung (29) eines Transportfahrzeugs (30) bewegt wird; und
die Position des ersten Markers (14, 18) mittels der Recheneinheit (13) in Abhängigkeit von einer ersten Momentanposition des Kamerasystems (9, 10, 11, 12) bestimmt wird, wenn der erste Marker (14, 18) erkannt wurde; und
die Position des zweiten Markers (15, 19) mittels der Recheneinheit (13) in Abhängigkeit von einer zweiten Momentanposition des Kamerasystems (9, 10, 11, 12) bestimmt wird, wenn der zweite Marker (15, 19) erkannt wurde.

3. Verfahren nach Anspruch 2,
**dadurch gekennzeichnet, dass** ein erster Bilddatenstrom mittels einer an einem ersten Ende des Hebezeugs (27) angeordneten ersten Kamera (9) des Kamerasystems (9, 10, 11, 12) erzeugt wird;
der erste Bilddatenstrom mittels der Recheneinheit (13) anhand des neuronalen Netzes analysiert wird;
der erste Marker (14, 15) mittels der Recheneinheit (13) basierend auf der Analyse des ersten Bilddatenstroms erkannt wird; und
die erste Momentanposition einer Momentanposition der ersten Kamera (9) entspricht.

4. Verfahren nach Anspruch 3,
**dadurch gekennzeichnet, dass** ein zweiter Bilddatenstrom mittels einer an einem zweiten, dem ersten Ende gegenüberliegenden, Ende des Hebezeugs (27) angeordneten zweiten Kamera (10) des Kamerasystems (9, 10, 11, 12) erzeugt wird;
der zweite Bilddatenstrom mittels der Recheneinheit (13) anhand des neuronalen Netzes analysiert wird;
der zweite Marker (15, 19) mittels der Recheneinheit (13) basierend auf der Analyse des zweiten Bilddatenstroms erkannt wird; und
die zweite Momentanposition einer Momentanposition der zweiten Kamera (10) entspricht.

5. Verfahren nach einem der Ansprüche 2 bis 4,
**dadurch gekennzeichnet, dass** basierend auf der Analyse des wenigstens einen Bilddatenstroms anhand des neuronalen Netzes:
ein Puffer (14) und/oder ein Lastfixierungsmittel (18) des Transportfahrzeugs (30) als der erste Marker (14, 18) erkannt wird; und
ein weiterer Puffer (15) und/oder ein weiteres Lastfixierungsmittel (19) des Transportfahrzeugs (30) als der zweite Marker (15, 19) erkannt wird.

6. Verfahren nach einem der Ansprüche 1 bis 5,
**dadurch gekennzeichnet, dass** die Position des ersten Markers (15, 19) mittels der Recheneinheit (13) in Abhängigkeit von einer Anordnung des ersten Markers (14, 18) in dem ersten Einzelbild (22) bestimmt wird; und
die Position des zweiten Markers (15, 19) mittels der Recheneinheit (13) in Abhängigkeit von einer Anordnung des zweiten Markers (15, 19) in dem zweiten Einzelbild (23) bestimmt wird.

7. Verfahren nach einem der Ansprüche 1 bis 6,
**dadurch gekennzeichnet, dass** basierend auf den Positionen der Marker (14, 15, 18, 19) mittels der Recheneinheit (13) ein Abstand der Marker (14, 15, 18, 19) voneinander bestimmt wird; und
die Last (28) mittels des Hebezeugs (27) abhängig von dem Abstand verladen wird.

8. Verfahren nach einem der Ansprüche 1 bis 7,
**dadurch gekennzeichnet, dass** wenigstens ein Arbeitsparameter des Hebezeugs (27) oder des Kransystems (8) abhängig von den Positionen der Marker (14, 15, 18, 19) mittels einer Steuerung (26) des Kransystems (8) eingestellt wird, um die Last (28) automatisiert zu verladen.

9. Kransystem zum Verladen einer Last (28),
wobei das Kransystem (8) ein Kamerasystem (9, 10, 11, 12) aufweist, dazu eingerichtet, wenigstens einen Bilddatenstrom zu erzeugen; dadurch gekennzeichent, dass
das Kransystem eine Recheneinheit (13) mit einem künstlichen neuronalen Netz aufweist, die Recheneinheit (13) dazu eingerichtet, den wenigstens einen Bilddatenstrom anhand des neuronalen Netzes zu analysieren;
die Recheneinheit (13) dazu eingerichtet ist, basierend auf der Analyse einen ersten Marker (14, 18) in einem ersten Einzelbild (22) des wenigstens einen Bilddatenstroms und einen zweiten Marker (15, 19) in einem zweiten Einzelbild (23) des wenigstens einen Bilddatenstroms zu erkennen;
die Recheneinheit (13) dazu eingerichtet ist, eine Position des ersten Markers (14, 18) und eine Position des zweiten Markers (15, 19) zu bestimmen; und
das Kransystem (8) eine Steuerung (26) aufweist, dazu eingerichtet, ein Hebezeug (27) des Kransystems (8) abhängig von den Positionen der Marker (14, 15, 18, 19) anzusteuern, um die Last (28) automatisiert zu verladen.

10. Kransystem nach Anspruch 9,
**dadurch gekennzeichnet, dass** die Steuerung (26) dazu eingerichtet ist, das Kamerasystem (9, 10, 11, 12) während des Erzeugens des wenigstens einen Bilddatenstroms entlang einer Längsrichtung (29) eines Transportfahrzeugs (30) zu bewegen; und
die Recheneinheit (13) dazu eingerichtet ist, die Position des ersten Markers (14, 18) in Abhängigkeit von einer ersten Momentanposition des Kamerasystems (9, 10, 11, 12) zu bestimmen, wenn der erste Marker (14, 18) erkannt wurde; und
die Recheneinheit (13) dazu eingerichtet ist, die Position des zweiten Markers (15, 19) in Abhängigkeit von einer zweiten Momentanposition des Kamerasystems (9, 10, 11, 12) zu bestimmen, wenn der zweite Marker (15, 19) erkannt wurde.

11. Kransystem nach Anspruch 10,
**dadurch gekennzeichnet, dass** das Kamerasystem (9, 10, 11, 12) eine an einem ersten Ende des Hebezeugs (27) angeordnete erste Kamera (9) aufweist, um einen ersten Bilddatenstrom zu erzeugen;
die Recheneinheit (13) dazu eingerichtet ist, den ersten Bilddatenstrom anhand des neuronalen Netzes zu analysieren; die Recheneinheit (13) dazu eingerichtet ist, den ersten Marker (14, 18) basierend auf der Analyse des ersten Bilddatenstroms zu erkennen; und
die erste Momentanposition einer Momentanposition der ersten Kamera (9) entspricht.

12. Kransystem nach Anspruch 11,
**dadurch gekennzeichnet, dass** das Kamerasystem (9, 10, 11, 12) eine an einem zweiten, dem ersten Ende gegenüberliegenden, Ende des Hebezeugs (27) angeordnete zweite Kamera (10) aufweist, um einen zweiten Bilddatenstrom zu erzeugen;
die Recheneinheit (13) dazu eingerichtet ist, den zweiten Bilddatenstrom anhand des neuronalen Netzes zu analysieren; die Recheneinheit (13) dazu eingerichtet ist, den zweiten Marker (15, 19) basierend auf der Analyse des zweiten Bilddatenstroms zu erkennen; und
die zweite Momentanposition einer Momentanposition der zweiten Kamera (10) entspricht.

13. Kransystem nach Anspruch 12,
**dadurch gekennzeichnet, dass** das Kamerasystem (9, 10, 11, 12) eine an dem ersten Ende des Hebezeugs angeordnete dritte Kamera (11) aufweist, um einen dritten Bilddatenstrom zu erzeugen, sowie eine an dem zweiten Ende des Hebezeugs angeordnete vierte Kamera (12) aufweist, um einen vierten Bilddatenstrom zu erzeugen;
die Recheneinheit (13) dazu eingerichtet ist, den dritten und den vierten Bilddatenstrom anhand des neuronalen Netzes zu analysieren;
die Recheneinheit (13) dazu eingerichtet ist, basierend auf der Analyse des dritten Bilddatenstroms einen dritten Marker (16, 20) in einem dritten Einzelbild (24) des dritten Bilddatenstroms zu erkennen und basierend auf der Analyse des vierten Bilddatenstroms einen vierten Marker (17, 21) in einem vierten Einzelbild (25) des vierten Bilddatenstroms zu erkennen;
die Recheneinheit (13) dazu eingerichtet ist, eine Position des dritten Markers (16, 20) in Abhängigkeit von einer dritten Momentanposition der dritten Kamera (11) zu bestimmen, wenn der dritte Marker (16, 20) erkannt wurde und eine Position des vierten Markers (17, 21) in Abhängigkeit von einer vierten Momentanposition der vierten Kamera (12) zu bestimmen, wenn der vierte Marker (17, 21) erkannt wurde; und
die Steuerung (26) dazu eingerichtet ist, das Hebezeug (27) des Kransystems (8) abhängig von den Positionen des dritten und des vierten Markers (16, 17, 20, 21) anzusteuern, um die Last (28) automatisiert zu verladen.

14. Kransystem nach einem der Ansprüche 12 oder 13,
**dadurch gekennzeichnet, dass** das Hebezeug (27) eine im Wesentlichen rechteckige Grundform aufweist; und
die erste und die zweite Kamera (9, 10) an Ecken der rechteckigen Grundform angeordnet sind.

15. Computerprogramm mit Befehlen, welche bei Ausführung des Computerprogramms durch ein Kransystem (8) nach einem der Ansprüche 9 bis 14, das Kransystem (8) dazu veranlassen, ein Verfahren nach einem der Ansprüche 1 bis 8 durchzuführen.

## Claims

1. Method for loading of a load (28) with a crane system (8), wherein by means of a camera system (9, 10, 11, 12) of the crane system (8), at least one image data stream is generated, **characterised in that**
the at least one image data stream is analysed by a computer unit (13) of the crane system (8) on the basis of an artificial neural network;
by means of the computer unit (13), on the basis of the analysis, a first marker (14, 18) is recognised in a first single image (22) of the at least one image data stream and a second marker (15, 19) is recognised in a second single image (23) of the at least one image data stream;
by means of the computer unit (13) a position of the first marker (14, 18) and a position of the second marker (15, 19) are determined; and
the load (28) is loaded automatically by a lifting device (27) of the crane system (8) dependent upon the positions of the markers (14, 15, 18, 19).

2. Method according to claim 1,
**characterised in that** during the generation of the at least one image data stream the camera system (9, 10, 11, 12) is moved along a longitudinal direction (29) of a transport vehicle (30); and
the position of the first marker (14, 18) is determined by the computer unit (13) dependent upon a first momentary position of the camera system (9, 10, 11, 12) when the first marker (14, 18) has been recognised; and
the position of the second marker (15, 19) is determined by the computer unit (13) dependent upon a second momentary position of the camera system (9, 10, 11, 12) when the second marker (15, 19) has been recognised.

3. Method according to claim 2,
**characterised in that** a first image data stream is generated by a first camera (9) of the camera system (9, 10, 11, 12) arranged at a first end of the lifting device (27);
the first image data stream is analysed by the computer unit (13) making use of the neural network;
the first marker (14, 15) is recognised by the computer unit (13) on the basis of the analysis of the first image data stream; and
the first momentary position corresponds to a momentary position of the first camera (9).

4. Method according to claim 3,
**characterised in that** a second image data stream is generated by a second camera (10) of the camera system (9, 10, 11, 12) arranged at a second end of the lifting device (27) opposite to the first end;
the second image data stream is analysed by the computer unit (13) making use of the neural network;
the second marker (15, 19) is recognised by the computer unit (13) on the basis of the analysis of the second image data stream; and
the second momentary position corresponds to a momentary position of the second camera (10).

5. Method according to one of claims 2 to 4,
**characterised in that**, on the basis of the analysis of the at least one image data stream, making use of the neural network: a buffer (14) and/or a load fixing means (18) of the transport vehicle (30) is recognised as the first marker (14, 18); and
a further buffer (15) and/or a further load fixing means (19) of the transport vehicle (30) is recognised as the second marker (15, 19).

6. Method according to one of claims 1 to 5,
**characterised in that** the position of the first marker (15, 19) is determined by the computer unit (13) dependent upon an arrangement of the first marker (14, 18) in the first single image (22); and
the position of the second marker (15, 19) is determined by the computer unit (13) dependent upon an arrangement of the second marker (15, 19) in the second single image (23).

7. Method according to one of claims 1 to 6,
**characterised in that** on the basis of the positions of the markers (14, 15, 18, 19), a spacing of the markers (14, 15, 18, 19) from one another is determined by the computer unit (13); and
the load (28) is loaded by the lifting device (27) dependent upon the spacing.

8. Method according to one of claims 1 to 7,
**characterised in that** at least one operating parameter of the lifting device (27) or the crane system (8) is set dependent upon the positions of the markers (14, 15, 18, 19) by a control system (26) of the crane system (8) in order to load the load (28) automatically.

9. Crane system for loading a load (28), wherein the crane system (8) has a camera system (9, 10, 11, 12) which is configured to generate at least one image data stream, **characterised in that**
the crane system has a computer unit (13) with an artificial neural network, the computer unit (13) is configured to analyse the at least one image data stream making use of the neural network;
the computer unit (13) is configured, on the basis of the analysis, to recognise a first marker (14, 18) in a first single image (22) of the at least one image data stream and a second marker (15, 19) in a second single image (23) of the at least one image data stream;
the computer unit (13) is configured to determine a position of the first marker (14, 18) and a position of the second marker (15, 19); and
the crane system (8) has a control system (26) which is configured to drive a lifting device (27) of the crane system (8) dependent upon the positions of the markers (14, 15, 18, 19) in order to load the load (28) automatically.

10. Crane system according to claim 9,
**characterised in that** the control system (26) is configured to move the camera system (9, 10, 11, 12) during the generation of the at least one image data stream along a longitudinal direction (29) of a transport vehicle (30); and
the computer unit (13) is configured to determine the position of the first marker (14, 18) dependent upon a first momentary position of the camera system (9, 10, 11, 12) when the first marker (14, 18) has been recognised; and
the computer unit (13) is configured to determine the position of the second marker (15, 19) dependent upon a second momentary position of the camera system (9, 10, 11, 12) when the second marker (15, 19) has been recognised.

11. Crane system according to claim 10,
**characterised in that** the camera system (9, 10, 11, 12) has a first camera (9) arranged at a first end of the lifting device (27) in order to generate a first image data stream;
the computer unit (13) is configured to analyse the first image data stream making use of the neural network;
the computer unit (13) is configured to recognise the first marker (14, 18) on the basis of the analysis of the first image data stream; and
the first momentary position corresponds to a momentary position of the first camera (9).

12. Crane system according to claim 11,
**characterised in that** the camera system (9, 10, 11, 12) has a second camera (10) arranged at a second end of the lifting device (27) opposite to the first end in order to generate a second image data stream;
the computer unit (13) is configured to analyse the second image data stream making use of the neural network;
the computer unit (13) is configured to recognise the second marker (15, 19) on the basis of the analysis of the second image data stream; and
the second momentary position corresponds to a momentary position of the second camera (10).

13. Crane system according to claim 12,
**characterised in that** the camera system (9, 10, 11, 12) has a third camera (11) arranged at the first end of the lifting device, in order to generate a third image data stream, and a fourth camera (12) arranged at the second end of the lifting device, in order to generate a fourth image data stream;
the computer unit (13) is configured to analyse the third and the fourth image data stream making use of the neural network;
the computer unit (13) is configured, on the basis of the analysis of the third image data stream, to recognise a third marker (16, 20) in a third single image (24) of the third image data stream and, on the basis of the analysis of the fourth image data stream, to recognise a fourth marker (17, 21) in a fourth single image (25) of the fourth image data stream;
the computer unit (13) is configured to determine a position of the third marker (16, 20) dependent upon a third momentary position of the third camera (11) when the third marker (16, 20) has been recognised and to determine a position of the fourth marker (17, 21) dependent upon a fourth momentary position of the fourth camera (12) when the fourth marker (17, 21) has been recognised; and
the control system (26) is configured to drive the lifting device (27) of the crane system (8) dependent upon the positions of the third and fourth markers (16, 17, 20, 21) in order to load the load (28) automatically.

14. Crane system according to one of claims 12 or 13, **characterised in that** the lifting device (27) has a substantially rectangular base shape; and
the first and second cameras (9, 10) are arranged at corners of the rectangular base shape.

15. Computer program with commands which, on execution of the computer program by a crane system (8) according to one of claims 9 to 14, cause the crane system (8) to carry out a method according to one of claims 1 to 8.

## Revendications

1. Procédé de chargement d'une charge (28) par un système (8) de grue,
dans lequel au moyen d'un système (9, 10, 11, 12) de caméra du système (8) de grue, on produit au moins un flux de données d'image ;
**caractérisé en ce que**
on analyse le au moins un flux de données d'image au moyen d'une unité (13) informatique du système (8) de grue à l'aide d'un réseau neuronal artificiel ;
au moyen de l'unité (13) informatique, en se basant sur l'analyse, on détecte un premier repère (14, 18) dans une première image (22) individuelle du au moins un flux de données d'image et un deuxième repère (15, 19) dans une deuxième image (23) individuelle du au moins un flux de données d'image ;
au moyen de l'unité (13) informatique, on détermine une position du premier repère (14, 18) et une position du deuxième repère (15, 19) ; et
on charge de manière automatisée la charge (28) au moyen d'un engin (27) de levage du système (8) de grue en fonction des positions des repères (14, 15, 18, 19).

2. Procédé suivant la revendication 1,
**caractérisé en ce que** l'on déplace le système (9, 10, 11, 12) de caméra suivant une direction (29) longitudinale d'un véhicule (30) de transport pendant la production du au moins un flux de données d'image ; et
on détermine la position du premier repère (14, 18) au moyen de l'unité (13) informatique en fonction d'une première position instantanée du système (9, 10, 11, 12) de caméra si le premier repère (14, 18) a été détecté ; et
on détermine la position du deuxième repère (15, 19) au moyen de l'unité (13) informatique en fonction d'une deuxième position instantanée du système (9, 10, 11, 12) de caméra, si le deuxième repère (15, 19) a été détecté.

3. Procédé suivant la revendication 2,
**caractérisé en ce que** l'on produit un premier flux de données d'image au moyen d'une première caméra (9) du système (9, 10, 11, 12) de caméra disposé à une première extrémité de l'engin (27) de levage ;
on analyse le premier flux de données d'image au moyen de l'unité (13) informatique à l'aide du réseau neuronal ;
on détecte le premier repère (14, 15) au moyen de l'unité (13) informatique en se basant sur l'analyse du premier flux de données d'image ; et
la première position instantanée correspond à une position instantanée de la première caméra (9).

4. Procédé suivant la revendication 3,
**caractérisé en ce que** l'on produit un deuxième flux de courant d'image au moyen d'une deuxième caméra (10) du système (9, 10, 11, 12) de caméra disposé à une deuxième extrémité, opposée à la première extrémité, de l'engin (27) de levage ;
on analyse le deuxième flux de données d'image au moyen de l'unité (13) informatique à l'aide du réseau neuronal ;
on détecte le deuxième repère (15, 19) au moyen de l'unité (13) informatique en se basant sur l'analyse du deuxième flux de données d'image ; et
la deuxième position instantanée correspond à une position instantanée de la deuxième caméra (10).

5. Procédé suivant l'une des revendications 2 à 4,
**caractérisé en ce que**, en se basant sur l'analyse du au moins un flux de données d'image à l'aide du réseau neuronal : on détecte un tampon (14) et/ou un moyen (18) d'immobilisation de la charge du véhicule (30) de transport comme étant le premier repère (14, 18) ; et
on détecte un autre tampon (15) et/ou un autre moyen (19) d'immobilisation de la charge du véhicule (30) de transport comme étant le deuxième repère (15, 19).

6. Procédé suivant l'une des revendications 1 à 5,
**caractérisé en ce que** l'on détermine la position du premier repère (15, 19) au moyen de l'unité (13) informatique en fonction d'une disposition du premier repère (14, 18) dans la première image (22) individuelle ;et
on détermine la position du deuxième repère (15, 19) au moyen de l'unité (13) informatique en fonction d'une disposition du deuxième repère (15, 19) dans la deuxième image (23) individuelle.

7. Procédé suivant l'une des revendications 1 à 6,
**caractérisé en ce que**, en se basant sur les positions des repères (14, 15, 18, 19), on détermine au moyen de l'unité (13) informatique une distance entre les repères (14, 15, 18, 19) ; et on charge la charge (28) au moyen de l'engin (27) de levage en fonction de la distance.

8. Procédé suivant l'une des revendications 1 à 7,
**caractérisé en ce que** l'on règle au moyen d'une commande (26) du système (8) de grue en fonction des positions des repères (9, 10, 11, 12) au moins un paramètre de travail de l'engin (27) de levage afin de charger la charge (28) de manière automatisée.

9. Système de grue pour le chargement d'une charge (28),
dans lequel le système (8) de grue a un système (9, 10, 11, 12) de caméra conçu pour produire au moins un flux de données d'image ;
**caractérisé en ce que**
le système de grue a une unité (13) informatique ayant un réseau neuronal artificiel, l'unité (13) informatique étant conçue pour analyser le au moins un flux de données d'image à l'aide du réseau neuronal ;
l'unité (13) informatique est conçue pour détecter en se basant sur l'analyse un premier repère (14, 18) dans une première image (22) individuelle du au moins un premier flux de données d'image et un deuxième repère (15, 19) dans une deuxième image (23) individuelle du au moins un flux de données d'image ;
l'unité (13) informatique est conçue pour déterminer une position du premier repère (14, 18) et une position du deuxième repère (15, 19) ; et
le système (8) de grue a une commande (26) qui est conçue pour commander un engin (27) de levage du système (8) de grue en fonction des positions des repères (14, 15, 18, 19) afin de charger la charge (28) de manière automatisée.

10. Système de grue suivant la revendication 9,
**caractérisé en ce que** la commande (26) est conçue pour déplacer suivant une direction (29) longitudinale d'un véhicule (30) de transport le système (9, 10, 11, 12) de caméra pendant la production du au moins un flux de données d'image ; et
l'unité (13) informatique est conçue pour déterminer la position du premier repère (14, 18) en fonction d'une première position instantanée du système (9, 10, 11, 12) de caméra si le premier repère (14, 18) a été détecté ; et
l'unité (13) informatique est conçue pour déterminer la position du deuxième repère (15, 19) en fonction d'une deuxième position instantanée du système (9, 10, 11, 12) de caméra, si le deuxième repère (15, 19) a été détecté.

11. Système de grue suivant la revendication 10,
**caractérisé en ce que** le système (9, 10, 11, 12) de caméra a une première caméra (9) disposée à une première extrémité de l'engin (27) de levage pour produire un premier flux de données d'image ;
l'unité (13) informatique est conçue pour analyser le premier flux de données d'image à l'aide du réseau neuronal ;
l'unité (13) informatique est conçue pour détecter le premier repère (14, 18) en se basant sur l'analyse du premier flux de données d'image ; et
la première position instantanée correspond à une position instantanée de la première caméra (9).

12. Système de grue suivant la revendication 11,
**caractérisé en ce que** le système (9, 10, 11, 12) de caméra a une deuxième caméra (10) disposée à une deuxième extrémité, opposée à la première extrémité, de l'engin (27) de levage, pour produire un deuxième flux de données d'image ;
l'unité (13) informatique est conçue pour analyser le deuxième flux de données d'image à l'aide du réseau neuronal ;
l'unité (13) informatique est conçue pour détecter le deuxième repère (15, 19) en se basant sur l'analyse du deuxième flux de données d'image ; et
la deuxième position instantanée correspond à une position instantanée de la deuxième caméra (10).

13. Système de grue suivant la revendication 12,
**caractérisé en ce que** le système (9, 10, 11, 12) de caméra a une troisième caméra (11) disposée à la première extrémité de l'engin de levage pour produire un troisième flux de données d'image, ainsi qu'une quatrième caméra (12) disposée à la deuxième extrémité de l'engin de levage pour produire un quatrième flux de données d'image ;
l'unité (13) informatique est conçue pour analyser le troisième et le quatrième flux de données d'image à l'aide du réseau neuronal ;
l'unité (13) informatique est conçue pour détecter en se basant sur l'analyse du troisième flux de données d'image un troisième repère (16, 20) dans une troisième image (24) individuelle du troisième flux de données d'image et pour détecter en se basant sur l'analyse du quatrième flux de données d'image un quatrième repère (17, 21) dans une quatrième image (25) individuelle du quatrième flux de données d'image ;
l'unité (13) informatique est conçu pour déterminer une position du troisième repère (16, 20) en fonction d'une troisième position instantanée de la troisième caméra (11), si le troisième repère (16, 20) a été détecté, et pour déterminer une position du quatrième repère (17, 21) en fonction d'une quatrième position instantanée de la quatrième caméra (12), si le quatrième repère (17, 21) a été détecté ; et
la commande (26) est conçue pour commander l'engin (27) de levage du système (8) de grue en fonction des positions des troisième et quatrième repères (16, 17, 20, 21) pour charger la charge (28) de manière automatisée.

14. Système de grue suivant l'une des revendications 12 ou 13, **caractérisé en ce que** l'engin (27) de levage a une forme de base sensiblement rectangulaire ; et
la première et la deuxième caméras (9, 10) sont disposées à des sommets de la forme de base rectangulaire.

15. Programme d'ordinateur ayant des instructions qui lorsque le programme d'ordinateur est réalisé par un système (8) de grue suivant l'une des revendications 9 à 14, fait que le système (8) de grue effectue un procédé suivant l'une des revendications 1 à 8.
